# EUROPEAN PATENT APPLICATION

(11) **EP 4 054 141 A1**
(43) Date of publication of application: **07.09.2022**
(21) Application number: 20891581.9
(22) Date of filing: 26.08.2020
(51) Int. Cl.: H04L 29/06, H04L 29/08, H04L 9/32

(54) **AUTHORIZATION METHOD AND APPARATUS**

(30) Priority: 30.11.2019 CN 201911209163; 12.02.2020 CN 202010088956
(71) Applicant: Huawei Technologies Co., Ltd., Shenzhen, Guangdong 518129 (CN)
(72) Inventor: ZHAO, Xuwen, Shenzhen, Guangdong 518129 (CN)
(74) Representative: MERH-IP Matias Erny Reichl Hoffmann Patentanwälte PartG mbB
(86) International application number: PCT/CN2020/111408
(87) International publication number: WO 2021/103693

(57) **Abstract**

Embodiments of this application disclose an authorization method and an apparatus. The authorization method includes: A first network device sends a service request to a second network device, where the service request includes a token, the token is used to check whether the first network device has permission to access the second network device, the token includes first information and/or second information, the first information is used to identify the first network device, and the second information is used to identify a network device allowed to access the second network device; and the first network device receives a service response sent by the second network device.

## Description

This application claims priority to Chinese Patent Application No. 201911209163.X, filed with the China National Intellectual Property Administration on November 30, 2019, and to Chinese Patent Application No. 202010088956.7, filed with the China National Intellectual Property Administration on February 12, 2020 and entitled "AUTHORIZATION METHOD AND APPARATUS", which are incorporated herein by reference in their entireties.

### TECHNICAL FIELD

This application relates to the field of communication technologies, and in particular, to an authorization method and an apparatus.

### BACKGROUND

Currently, when a security problem in a scenario in which a unified data repository (unified data repository, UDR) and a unified data management (unified data management, UDM) are separately deployed is discussed, some countries or operators may deploy a plurality of UDMs and UDRs in a same public land mobile network (public land mobile network, PLMN).

Generally, when the UDM needs to request a service of the UDR, the UDR needs to check the UDM.

Therefore, how the UDR checks the UDM is a problem that needs to be resolved.

### SUMMARY

This application provides an authorization method and an apparatus, so that a UDM located in an authorized area can access data or a service of a UDR.

According to a first aspect, this application provides an authorization method, including:
A first network device sends a service request to a second network device, where the service request includes a token, the token is used to check whether the first network device has permission to access the second network device, the token includes first information and/or second information, the first information is used to identify the first network device, and the second information is used to identify a network device allowed to access the second network device; and the first network device receives a service response sent by the second network device.

For example, when the second network device succeeds in checking the token, the first network device receives the service response sent by the second network device, where the service response is used to respond to the service request.

In this embodiment of this application, the first information is used to identify the first network device, and the second information is used to identify the network device allowed to access the second network device. The token includes the first information and/or the second information, so that the second network device may check, based on the first information and/or the second information, whether the first network device is located in an area in which the first network device is allowed to access the second network device. In this way, an unauthorized first network device is prevented from accessing the second network device, and security of information exchange between the first network device and the second network device is improved.

In a possible implementation, the first information includes a domain of the first network device, and the second information includes an allowed domain of the second network device; the first information includes a routing indicator of the first network device, and the second information includes a routing indicator list; or the first information includes a group identifier of the first network device, and the second information includes a group identifier list.

In a possible implementation, before that a first network device sends a service request to a second network device, the method further includes: The first network device sends a token request to a third network device, where the token request is used to request to deliver the token; and the first network device receives a token response that includes the token and that is sent by the third network device.

In a possible implementation, the token request includes the first information.

In a possible implementation, before that the first network device sends a token request to a third network device, the method further includes: The first network device sends a first registration request to the third network device, where the first registration request includes the first information.

According to a second aspect, this application provides an authorization method, including:
A second network device receives a service request from a first network device, where the service request includes a token, the token is used to check whether the first network device has permission to access the second network device, the token includes first information and/or second information, the first information is used to identify the first network device, and the second information is used to identify a network device allowed to access the second network device; the second network device determines based on the token, whether the first network device has the permission to access the second network device; and if the first network device has the permission to access the second network device, the second network device sends a service response to the first network device.

It may be understood that the service response is used to respond to the service request.

In this embodiment of this application, after receiving the service request including the token, the second network device may determine, based on information (the first information and/or the second information) included in the token, whether the first network device has the permission to access the second network device. If the first network device has the permission to access the second network device, the second network device may send the service response to the first network device. If the first network device is located in an area in which the first network device is allowed to access the second network device, the first network device can access the second network device, thereby improving security of information exchange.

In a possible implementation, before that a second network device receives a service request from a first network device, the method further includes: The second network device sends a second registration request to a third network device, where the second registration request includes the second information.

In a possible implementation, the first information includes a domain of the first network device, and the second information includes an allowed domain of the second network device; the first information includes a routing indicator of the first network device, and the second information includes a routing indicator list; or the first information includes a group identifier of the first network device, and the second information includes a group identifier list.

According to a third aspect, this application provides an authorization method, including:
A third network device receives a token request sent by a first network device, where the token request is used to request to deliver a token; the third network device determines, based on the token request, whether the first network device has permission to access a second network device; if the first network device has the permission to access the second network device, the third network device sends a token response including the token to the first network device, where the token includes first information and/or second information, the first information is used to identify the first network device, and the second information is used to identify a network device allowed to access the second network device.

In a possible implementation, before that a third network device receives a token request sent by a first network device, the method further includes: The third network device receives a first registration request from the first network device, where the first registration request includes the first information; and the third network device receives a second registration request from the second network device, where the second registration request includes the second information.

In a possible implementation, the first information includes a domain of the first network device, and the second information includes an allowed domain of the second network device; the first information includes a routing indicator of the first network device, and the second information includes a routing indicator list; or the first information includes a group identifier of the first network device, and the second information includes a group identifier list.

According to a fourth aspect, this application provides a communication apparatus, including:
a sending unit, configured to send a service request to a second network device, where the service request includes a token, the token is used to check whether the communication apparatus has permission to access the second network device, the token includes first information and/or second information, the first information is used to identify the communication apparatus, and the second information is used to identify a network device allowed to access the second network device; and a receiving unit, configured to receive a service response sent by the second network device.

In this embodiment of this application, the communication apparatus may be a first network device. Optionally, the first network device may include a service requester.

In a possible implementation, the first information includes a domain of the communication apparatus, and the second information includes an allowed domain of the second network device; the first information includes a routing indicator of the communication apparatus, and the second information includes a routing indicator list; or the first information includes a group identifier of the communication apparatus, and the second information includes a group identifier list.

In a possible implementation, the sending unit is further configured to send a token request to a third network device, where the token request is used to request to deliver the token; and the receiving unit is further configured to receive a token response that includes the token and that is sent by the third network device.

In a possible implementation, the token request includes the first information.

In a possible implementation, the sending unit is further configured to send a first registration request to the third network device, where the first registration request includes the first information.

According to a fifth aspect, this application provides a communication apparatus, including:
a receiving unit, configured to receive a service request from a first network device, where the service request includes a token, the token is used to check whether the first network device has permission to access the communication apparatus, the token includes first information and/or second information, the first information is used to identify the first network device, and the second information is used to identify a network device allowed to access the communication apparatus; a processing unit, configured to determine, based on the token, whether the first network device has permission to access the communication apparatus; and a sending unit, configured to: if the first network device has the permission to access the communication apparatus, send a service response to the first network device.

It may be understood that the service response is used to respond to the service request.

In a possible implementation, the sending unit is further configured to send a second registration request to a third network device, where the second registration request includes the second information.

In a possible implementation, the first information includes a domain of the first network device, and the second information includes an allowed domain of the communication apparatus; the first information includes a routing indicator of the first network device, and the second information includes a routing indicator list; or the first information includes a group identifier of the first network device, and the second information includes a group identifier list.

In this embodiment of this application, the communication apparatus may be a second network device. Optionally, the second network device may include a service provider.

According to a sixth aspect, this application provides a communication apparatus, including:
a receiving unit, configured to receive a token request sent by a first network device, where the token request is used to request to deliver a token; a processing unit, configured to determine, based on the token request, whether the first network device has permission to access a second network device; and a sending unit, configured to: if the first network device has the permission to access the second network device, send a token response including the token to the first network device, where the token includes first information and/or second information, the first information is used to identify the first network device, and the second information is used to identify a network device allowed to access the second network device.

In a possible implementation, the receiving unit is further configured to receive a first registration request from the first network device, where the first registration request includes the first information; and the receiving unit is further configured to receive a second registration request from the second network device, where the second registration request includes the second information.

In a possible implementation, the first information includes a domain of the first network device, and the second information includes an allowed domain of the second network device; the first information includes a routing indicator of the first network device, and the second information includes a routing indicator list; or the first information includes a group identifier of the first network device, and the second information includes a group identifier list.

In this embodiment of this application, the communication apparatus may be a third network device.

According to a seventh aspect, an embodiment of this application provides a communication apparatus. The communication apparatus includes a processor, a memory, and a transceiver. The transceiver is configured to receive a signal or send a signal; the memory is configured to store program code; and the processor is configured to invoke the program code to perform the method according to the first aspect; the processor is configured to invoke the program code to perform the method according to the second aspect; or the processor is configured to invoke the program code to perform the method according to the third aspect.

According to an eighth aspect, an embodiment of this application provides a communication apparatus. The communication apparatus includes a processor and an interface circuit. The interface circuit is configured to receive a code instruction and transmit the code instruction to the processor; and the processor runs the code instruction to perform the method according to the first aspect; the processor runs the code instruction to perform the method according to the second aspect; or the processor runs the code instruction to perform the method according to the third aspect.

According to a ninth aspect, this application provides a communication system. The communication system includes a first network device, a second network device, and a third network device.

The first network device is configured to send a first registration request to the third network device, where the first registration request includes first information. The second network device is configured to send a second registration request to the third network device, where the second registration request includes second information. The third network device is configured to receive the first registration request and the second registration request.

The first network device is further configured to send a token request to the third network device. The third network device is further configured to: receive the token request, and send a token response including the token to the first network device. The first network device is further configured to receive the token response including the token.

The first network device is further configured to send a service request to the second network device, where the service request includes the token, the token is used to check whether the first network device has permission to access the second network device, the token includes first information and/or second information, the first information is used to identify the first network device, and the second information is used to identify a network device allowed to access the second network device. The second network device is further configured to: receive the service request, determine whether the first network device has the permission to access the second network device, and when the first network device has the permission to access the second network device, send, by the second network device, a service response to the first network device. The first network device is further configured to receive the service response.

According to a tenth aspect, an embodiment of this application provides a computer-readable storage medium. The computer-readable storage medium is configured to store instructions; and when the instructions are executed, the method according to the first aspect is implemented; when the instructions are executed, the method according to the second aspect is implemented; or when the instructions are executed, the method according to the third aspect is implemented.

According to an eleventh aspect, an embodiment of this application provides a computer program product. The computer program product includes instructions; and when the instructions are executed, the method according to the first aspect is implemented; when the instructions are executed, the method according to the second aspect is implemented; or when the instructions are executed, the method according to the third aspect is implemented.

### BRIEF DESCRIPTION OF DRAWINGS

FIG. 1 is a schematic diagram of a network architecture of an IP multimedia subsystem (IP multimedia subsystem, IMS) supporting a service-oriented interface according to an embodiment of this application;
FIG. 2 is a schematic diagram of a network architecture of a service-oriented interface according to an embodiment of this application;
FIG. 3 is a schematic flowchart of an authorization method according to an embodiment of this application;
FIG. 4 is a schematic flowchart of an authorization method according to an embodiment of this application;
FIG. 5 is a schematic diagram of a structure of a communication apparatus according to an embodiment of this application;
FIG. 6 is a schematic diagram of a structure of a communication apparatus according to an embodiment of this application; and
FIG. 7 is a schematic flowchart of an authorization method according to an embodiment of this application.

### DESCRIPTION OF EMBODIMENTS

Detailed descriptions are provided separately below.

In the specification, the claims, and the accompanying drawings of this application, the terms "first", "second", "third", "fourth", and the like are intended to distinguish between different objects but do not indicate a particular order. In addition, the terms "including", "having", and any other variant thereof are intended to cover a non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

An "embodiment" mentioned in this specification means that a particular characteristic, structure, or feature described with reference to the embodiments may be included in at least one embodiment of this application. The phrase that occurs at different positions in the specification does not necessarily refer to a same embodiment, or an independent or alternative embodiment exclusive of another embodiment. A person skilled in the art understands, in explicit and implicit manners, that an embodiment described in this application may be combined with another embodiment.

In this application, "at least one (item)" means one or more, "a plurality of" means two or more, and "at least two (items)" means two or more than three (including three). The term "and/or" is used to describe an association relationship for describing associated objects and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following" or similar expressions indicate any combination of the following, including one or any combination of two or more of the following. For example, at least one of a, b, or c may indicate: a, b, c, "a and b", "a and c", "b and c", or "a, b and c", where a, b, and c each may be singular or plural.

The following describes embodiments of this application with reference to the accompanying drawings.

First, a network architecture in embodiments of this application is described.

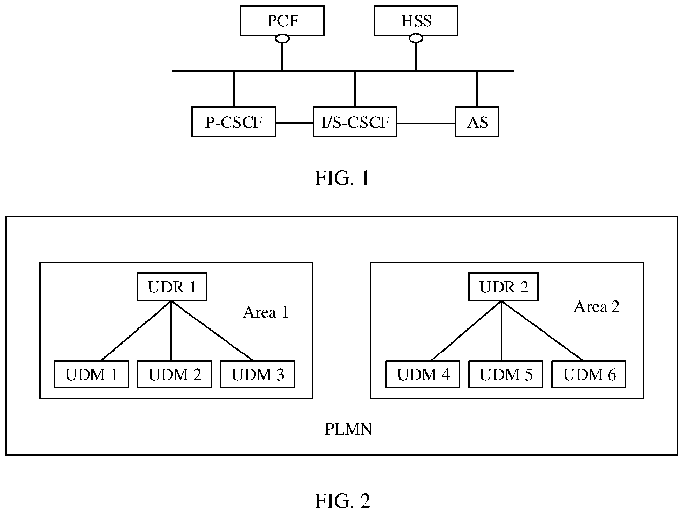

FIG. 1 is a schematic diagram of a network architecture of an IMS supporting a service-oriented interface according to an embodiment of this application, as shown in FIG. 1.

A policy control network function, for example, a policy control function (policy control function, PCF), is a unified policy framework used to guide a network behavior, and provides policy rule information and the like for a control plane function (such as an AMF or SMF network function).

A home subscriber server (home subscriber server, HSS), configured to: store and manage user subscription data, and perform functions such as authentication and authentication vector calculation.

A proxy-call session control function (proxy-call session control function, P-CSCF) is the first network node in an IP multimedia core network. A function of the P-CSCF is similar to a proxy, that is, the P-CSCF receives a request message from UE and forwards the request message to a network (for example, the core network).

An interrogating-call session control function (Interrogating-call session control function, I-CSCF) is a connection node, in an operator network, for all messages destined for a user of a network operator or a roaming user currently located in a service area of the network operator.

A serving-call session control function (serving-call session control function, S-CSCF) performs a session control service for user equipment UE, and maintains a service session state required by a network operator. In an operator network, different S-CSCFs may have different functions.

An application server (application server, AS) serves as a server of an application, provides an application service for an IMS network, and may be deployed in a home network or a third-party network (for example, an application server or a network outside the home network).

FIG. 2 is a schematic diagram of a network architecture of a service-oriented interface according to an embodiment of this application, as shown in FIG. 2.

A network repository network function, for example, including a network repository function (network repository function, NRF), may be used to maintain real-time information about all network function services in a network. In embodiments of this application, the NRF may complete network function (network function, NF) registration and network function discovery, store registration information of each NF in a same PLMN, and serve as an authorization server to complete authorization and generate a token. The NRF also has a token verification function. For example, there is a service-oriented interface between network functions in a core network, and a manner of communication between the network functions may be a service invoking manner. NFs may be classified into a service requester (an NF service consumer) and a service provider (an NF service producer) based on different service requests and service providers. For example, the service requester may include a unified data management (unified data management, UDM) network function, and the service provider may include a unified data repository (unified data repository, UDF) network function. For example, the service requester may further include a CSCF or an AS, and the service provider may further include an HSS. It may be understood that the service requester and the service provider in embodiments of this application not only include the foregoing examples but also another type of service requester and another type of service provider. This is not limited in embodiments of this application.

The unified data management (unified data management, UDM) network function may be used for user equipment identifier processing, access authentication, registration, mobility management, and so on. It may be understood that the UDM network function is referred to as a UDM for short below.

The unified data repository (unified data repository, UDR) network function may be used to store and manage user subscription data and the like. Another network function NF may obtain or update data of the UDR.

It should be understood that the network architectures shown in FIG. 1 and FIG. 2 are based on a service-oriented architecture. A conventional network element function (or network function) is split into several self-contained, self-managed, and reusable network function service modules based on a network function virtualization (network function virtualization, NFV) technology. Customized network function reconstruction may be implemented by flexibly defining a service module set, and a service process is formed externally by using a unified service invoking interface. The schematic diagram of the network architecture shown in FIG. 1 or FIG. 2 may be understood as a schematic diagram of a service-based network architecture in a non-roaming scenario. Embodiments of this application are also applicable to a roaming scenario.

It may be understood that the terms described above may have different names in different fields or different standards. Therefore, the foregoing names should not be understood as limitations to embodiments of this application. The foregoing network functions or functions may be network elements in a hardware device, may be software functions run on dedicated hardware, or may be instantiated virtualization functions on a platform (for example, a cloud platform).

Further, when a service requester (for example, a UDM) invokes a service of a service provider (for example, a UDR), the service provider usually cannot determine whether the service requester is located in an area with access permission. For example, when a UDM 3 in FIG. 2 accesses a UDR 2, the UDR 2 usually cannot determine whether the UDM 3 has permission to access the UDR 2. Therefore, this application provides an area-related authorization method. In a scenario in which a plurality of UDMs and UDRs exist in one PLMN (as shown in FIG. 2), or a plurality of CSCFs, ASs, and HSSs exist (as shown in FIG. 1), area-related authorization may be performed on an NF that accesses a UDR or an HSS, to prevent the UDR or the HSS from being accessed by an NF located in an unauthorized area.

This application is mainly applied to a 5G network in which a plurality of UDMs and UDRs are deployed in a same PLMN, an IMS network that supports a service-oriented interface and in which a plurality of CSCFs, ASs, and HSSs are deployed in a same PLMN, or another network with an area restriction for access between NFs. For example, only UDMs in an area b and an area c are allowed to access a UDR in an area a. In embodiments of this application, NFs are based on a service-oriented architecture, and the NFs communicate with each other in a manner of invoking a service by using a service-oriented interface. An NRF provides services such as registration, service discovery, and authorization for an NF managed by the NRF. A specific network architecture or an NF is not limited in embodiments of this application. A method provided in this application can be used provided that a communication system includes a service provider, a service requester, and an NF (such as an NRF) that provides a service such as registration and authorization.

The following describes in detail an authorization method provided in this application by using an example in which a service requester (an NF service consumer) is a UDM and a service provider (an NF service producer) is a UDR.

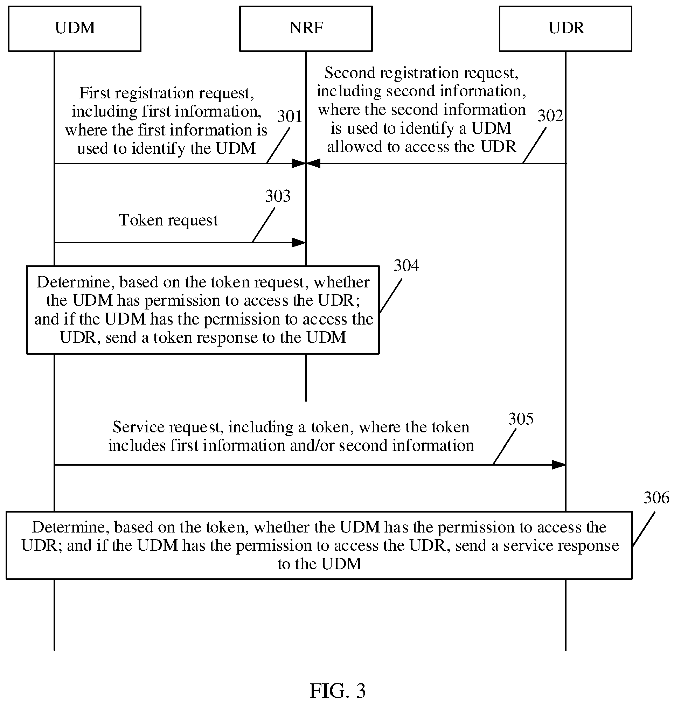

FIG. 3 is a schematic flowchart of an authorization method according to an embodiment of this application. The method may be applied to the network architecture shown in FIG. 2. As shown in FIG. 3, the method includes the following steps.

301. A UDM sends a first registration request to an NRF, where the first registration request includes first information, and the first information is used to identify the UDM. Correspondingly, the NRF receives the first registration request.

In this embodiment of this application, the first information is used to identify the UDM. For example, the first information may include a domain (an NF domain) of the UDM, and the domain of the UDM may indicate an area in which the UDM is located, a specific range, or a specific set. For another example, the first information may include routing indicator (routing indicator, RI) information of the UDM, and the routing indicator information may be used by another NF to discover one or more UDMs, that is, the routing indicator information may be used to indicate a set of one or more UDMs. For another example, the first information may include group identifier (group ID) information of the UDM, and the group identifier information may be used to indicate a group including one or more UDMs.

In addition to the first information, the first registration request may further include a profile (NF profile) parameter of the UDM. The profile parameter of the UDM may include parameters such as a network function instance ID (NF instance ID) of the UDM, a network function type (NF type) of the UDM, a group identifier (group ID) of the UDM, and a range of subscription permanent identifiers (range(s) of (subscriber permanent identifier, SUPI)s) of the UDM. It may be understood that a specific parameter of the profile parameter of the UDM is not limited in this embodiment of this application.

In this embodiment of this application, the first registration request is used to register a related information parameter (for example, a network function profile, NF profile) of the UDM with the NRF, so that the NRF performs service discovery and authorization.

302. A UDR sends a second registration request to the NRF, where the second registration request includes second information, and the second information is used to identify a UDM allowed to access the UDR. Correspondingly, the NRF receives the second registration request.

In this embodiment of this application, the second information is used to identify the UDM allowed to access the UDR. In other words, the second information may be used to indicate one or more UDMs, and the one or more UDMs indicated by the second information are UDMs allowed to access the UDR. It may be understood that the UDM allowed to access the UDR and the UDR may be located in a same area, so that a delay of accessing the UDR by the UDM can be reduced, and access efficiency can be improved. Alternatively, the UDM allowed to access the UDR and the UDR may not belong to a same area. Whether the UDR and a corresponding UDM are located in a same area is not limited in this embodiment of this application.

For example, the second information may be an allowed domain (allowed NF domains) of the UDR. For another example, the second information may be a routing indicator list (RI list), and the routing indicator list may include routing indicators of one or more UDMs allowed to access the UDR. For another example, the second information may be a routing indicator set, and the routing indicator set includes routing indicators of one or more UDMs allowed to access the UDR. For example, each RI in the RI list may be used to identify a UDM (which may be one UDM or a plurality of UDMs) in a specific area. For another example, the second information may be a group identifier list (group ID list), or the second information may be a group identifier set. For example, each group identifier in the group identifier list may be used to identify a specific UDM group (which may include one UDM or a plurality of UDMs).

For example, when the first information includes the NF domain, the second information may include the allowed NF domains; when the first information includes the RI, the second information includes the RI list; and when the first information includes the group identifier, the second information includes the group identifier list.

Optionally, when the second information includes any one of the routing indicator list, the routing indicator set, the group identifier list, or the group identifier set, before 302, an operator may further configure the second information or the like for the UDR. How to configure the second information for the UDR is not limited in this embodiment of this application.

In addition to the second information, the second registration request may further include a profile (profile) parameter of the UDR. The second NF profile parameter may include parameters such as a network function instance ID (NF instance ID) of the UDR, a network function type (NF type) of the UDR, a group identifier (group ID) of the UDR, and a range of subscription permanent identifiers (range(s) of (subscriber permanent identifier, SUPI)s) of the UDR. It may be understood that a specific parameter of the profile parameter of the UDR is not limited in this embodiment of this application.

In this embodiment of this application, the second registration request is used to register a related information parameter (for example, a network function profile, NF profile) of the UDR with the NRF, so that the NRF performs service discovery and authorization.

303. The UDM sends a token request (token request) to the NRF, where the token request is used to request to deliver a token (token). Correspondingly, the NRF receives the token request.

In this embodiment of this application, the token request may include one or more parameters in the profile parameter of the UDM. For a parameter type included in the profile parameter of the UDM, refer to the foregoing descriptions. Details are not described herein again.

Optionally, the token request may further include the first information. For the first information, refer to the foregoing descriptions. Details are not described herein again.

It may be understood that, during specific implementation, 301 and 302 are not necessarily performed each time. To be specific, after the UDM sends the first registration request to the NRF and the UDR sends the second registration request to the NRF, within a specific validity period, the authorization method provided in this embodiment of this application may alternatively include only 303 to 306.

304. The NRF determines, based on the token request, whether the UDM has permission to access the UDR; and if the UDM has the permission to access the UDR, the NRF sends a token response (token response) to the UDM. Correspondingly, the UDM receives the token response.

Optionally, when the token request does not include the first information, the token request may further include indication information. The indication information is used to indicate that the NRF needs to determine whether the UDM has the permission to access the UDR; the indication information is used to indicate that the NRF needs to determine whether the UDM is located in an area in which the UDM is allowed to access the UDR; or the indication information is used to indicate the NRF to perform an area-related authorization operation. In other words, before the NRF determines whether the UDM has the permission to access the UDR, the NRF may further determine whether it is necessary to determine whether the UDM has the permission to access the UDR.

Optionally, when the token request includes the first information, the NRF may determine, based on the first information, whether the UDM has the permission to access the UDR.

Optionally, when the token request does not include the first information, the NRF may determine, based on one or more parameters in the profile parameter of the UDM included in the token request, whether the UDM has the permission to access the UDR. For example, the NRF may obtain the first information of the UDM based on the profile parameter of the UDM in the token request. It may be understood that there is an association relationship between the profile parameter of the UDM and the domain of the UDM, that is, the NRF may obtain the first information of the UDM based on the profile parameter of the UDM. For example, the NRF may query, based on one or more parameters, for example, an instance identifier of the UDM, in the profile parameter of the UDM, related parameters of the UDM stored in the NRF, to obtain the first information of the UDM. Alternatively, the NRF may obtain the profile parameter of the UDM based on the first information of the UDM.

Optionally, when the token request includes the first information, the NRF may determine, based on the first information, whether the UDM has the permission to access the UDR. It may be understood that for a method for determining, by the NRF, whether the UDM has the permission to access the UDR, refer to the following descriptions of Manner 1, Manner 2, and Manner 3. Details are not described herein again.

It may be understood that the token request may include identifier information of the UDR, and the identifier information of the UDR may be used to indicate the UDR that the UDM needs to access. To be specific, the NRF may learn of, by using the identifier information of the UDR, a specific UDR that the UDM needs to access. For example, as shown in FIG. 2, if a UDM 1 needs to access a UDR 1 in a same area, the token request may include identifier information of the UDR 1. For another example, if the UDM 1 needs to access the UDR 2 that does not belong to a same area, the token request may include identifier information of the UDR 2. It may be understood that all token requests in the following Manner 1, Manner 2, and Manner 3 may include the identifier information of the UDR.

In this embodiment of this application, based on different first information included in the token request, the method for determining, by the NRF, whether the UDM has the permission to access the UDR may be as follows:

### Manner 1:

If the token request includes the NF domain of the UDM, the NRF may obtain the allowed NF domain of the UDR based on the identifier information of the UDR included in the token request, and determine whether the allowed NF domain of the UDR includes the NF domain of the UDM. If the allowed NF domain of the UDR includes the NF domain of the UDM, the NRF generates/produces the token. If the allowed NF domain of the UDR does not include the NF domain, the NRF does not generate the token, and therefore does not return the token response to the UDM. Alternatively, the NRF may return the token response to the UDM. The token response may include a failure cause value, exception information, and/or the like. The failure cause value is used to indicate a reason why the UDM cannot access the UDR. Alternatively, the NRF may return a reject message to the UDM.

Optionally, the token may include the NF domain of the UDM; the token includes the allowed NF domain of the UDR; or the token includes the NF domain of the UDM and the allowed NF domain of the UDR.

For example, for a specific format of the token, refer to Table 1.

**Table 1**

| Claim | Content |
|---|---|
| Issuer | Network function instance ID of the NRF (NF instance ID of NRF) |
| Subject | Network function instance ID of the UDM (NF instance ID of the NF service consumer) |
| Audience | NF type (NF type)/Network function instance ID of the UDR (NF instance ID(s) of the NF service producer) |
| Scope | Expected service name(s) |
| Expiration | Expiration time |

The NF domain of the UDM and/or the allowed NF domain of the UDR included in the token may be located in any one of the claims shown above. For example, the NF domain and the allowed NF domain may be located in a same claim, or the NF domain and the allowed NF domain may be located in different claims.

### Manner 2:

If the token request includes the RI of the UDM, the NRF may determine whether the RI of the UDM is included in the RI list of the UDR. If the RI of the UDM is included in the RI list of the UDR, the NRF generates the token. If the RI list of the UDR does not include the RI of the UDM, the NRF does not generate the token, and therefore does not return the token response to the UDM. Alternatively, the NRF may return the token response to the UDM, where the token response may include a failure cause value, exception information, and/or the like. Alternatively, the NRF may return a reject message to the UDM.

Optionally, the token may include the RI of the UDM; the token includes the RI list of the UDR; or the token includes the RI of the UDM and the RI list of the UDR.

For a specific location of the RI or the RI list, refer to related descriptions in Table 1.

### Manner 3:

If the token request includes the group identifier of the UDM, the NRF determines whether the group identifier of the UDM is included in a UDM group identifier list of the UDR. The UDM group identifier list of the UDR includes identifiers of one or more UDM groups, and an identifier of each UDM group refers to a UDM group allowed to access the UDR. If the group identifier of the UDM is included in the UDM group identifier list of the UDR, the NRF generates the token. If the UDM group identifier list of the UDR does not include the group identifier of the UDM, the NRF may not return the token response to the UDM. Alternatively, the NRF may return the token response to the UDM, where the token response may include a failure cause value, exception information, and/or the like. Alternatively, the NRF may return a reject message to the UDM.

Optionally, the token may include the group identifier of the UDM; the token includes the UDM group identifier list of the UDR; or the token includes the group identifier of the UDM and the UDM group identifier list of the UDR.

For specific locations of the group identifier and the group identifier list, refer to related descriptions in Table 1.

It may be understood that the NRF may further perform integrity protection on the token, that is, the NRF may generate the token based on the identifier information of the UDR included in the token request. To be specific, the NRF may perform integrity protection on the token by using a shared key between the NRF and the UDR indicated by the identifier information of the UDR included in the token request, or by using a private key; and so on.

305. The UDM sends a service request to the UDR, where the service request includes the token, the token is used to check whether the UDM has the permission to access the UDR, and the token includes the first information and/or the second information. Correspondingly, the UDR receives the service request.

306. The UDR determines, based on the token in the service request, whether the UDM has the permission to access the UDR; and if the UDM has the permission to access the UDR, the UDR sends a service response to the UDM. Correspondingly, the UDM receives the service response.

In this embodiment of this application, the UDR may determine, based on the first information and/or the second information included in the token, whether the UDM has the permission to access the UDR. For example, the UDR may determine, based on the NF domain of the UDM in the token, whether the NF domain of the UDM belongs to a range of allowed NF domains of the UDR. If the NF domain of the UDM belongs to the range of allowed NF domains of the UDR, the UDM has the permission to access the UDR. Alternatively, the UDR may determine, based on the allowed NF domain of the UDR in the token, whether the allowed NF domain of the UDR is the same as an allowed NF domain of the UDF. If the allowed NF domain of the UDR is the same as the allowed NF domain of the UDF, it is determined that the UDM has the permission to access the UDR. For another example, the UDR may determine, based on the RI of the UDM in the token, whether the RI of the UDM belongs to the RI list of the UDR. If the RI of the UDM belongs to the RI list of the UDR, the UDM has the permission to access the UDR. Alternatively, the UDR may determine, based on the RI list of the UDR in the token, whether the RI list of the UDR is the same as an RI list of the UDR. If the RI list of the UDR is the same as the RI list of the UDR, it is determined that the UDM has the permission to access the UDR. For another example, the UDR may determine, based on the group identifier of the UDM in the token, whether the group identifier of the UDM belongs to the UDM group identifier list of the UDR; or the UDR may determine through comparison whether the UDM group identifier list of the UDR included in the token is the same as a UDM group identifier list of the UDR, to determine whether the UDM has the permission to access the UDR. If the UDR determines that the UDM has the permission to access the UDR, the UDR returns the service response to the UDM.

It may be understood that, after receiving the service request including the token, the UDR may further perform integrity check on the token, and if the check succeeds, return the service response to the UDM. For example, the UDR may perform integrity check on the token by using a shared key between the UDR and the NRF, or by using a public key of the NRF. After the check succeeds, the UDR responds to the UDM for a related service requested by the service request. It may be understood that the UDR may first perform integrity check on the token, and then check whether the UDM has the permission to access the UDR. Alternatively, the UDR may first check whether the UDM has the permission to access the UDR, and then perform integrity check on the token; and so on. This is not limited in this embodiment of this application.

It may be understood that, during specific implementation, 303 and 304 are not necessarily performed each time. To be specific, after the UDM requests the token from the NRF, within a validity period of the token, the authorization method provided in this embodiment of this application may alternatively include only 305 and 306.

In this embodiment of this application, for example, the service request may be used to request to query user subscription data, so that the UDR returns the user subscription data. For another example, the service request may be used to request to update policy data, so that the UDR returns an update status (an update success or failure) to the UDM after updating the policy data. Content requested by the service request is not limited in this embodiment of this application.

It may be understood that the method shown in FIG. 3 is also applicable to the network architecture shown in FIG. 1. For example, the UDM may be replaced with a CSCF (for example, the P-CSCF, the S-CSCF, or the I-CSCF in FIG. 1) or an AS, and the UDR may be replaced with an HSS. For example, the first information is used to identify the CSCF, and the second information is used to identify a CSCF allowed by the HSS. For another example, the first information may include a domain of the CSCF, and the second information may include an allowed domain of the HSS. For another example, the first information may include a routing indicator of the CSCF, and the second information may include a routing indicator list of the HSS. For a specific implementation, refer to the method shown in FIG. 3. Details are not described herein again.

In this embodiment of this application, the first information is used to identify a first network device (for example, the UDM), and the second information is used to identify a network device allowed to access the second network device (for example, the UDR). The token includes the first information and/or the second information, so that the second network device may check, based on the first information and/or the second information, whether the first network device is located in an area in which the first network device allowed to access the second network device. In this way, an unauthorized first network device is prevented from accessing the second network device, and security of information exchange between the first network device and the second network device is improved. Further, the first network device in a same area is authorized to access the second network device in the same area, so that a delay of accessing the second network device by the first network device can be reduced, and efficiency can be improved.

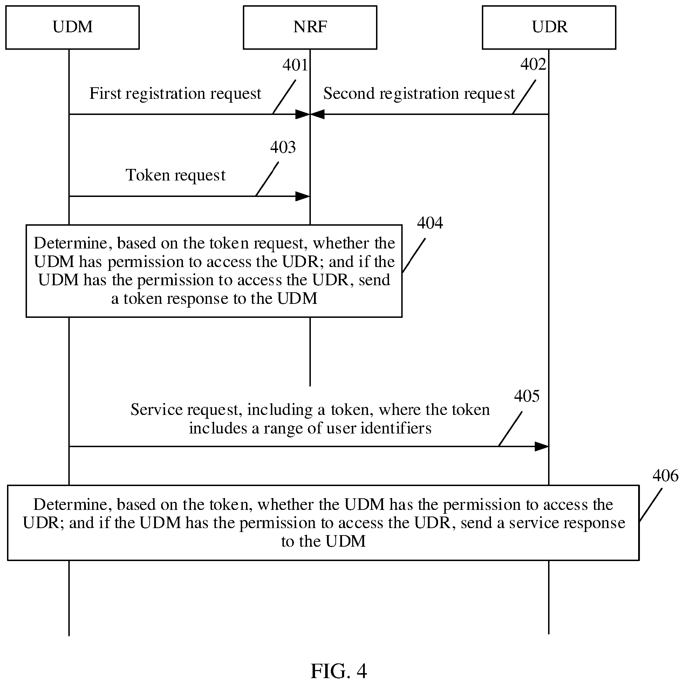

FIG. 4 is a schematic flowchart of an authorization method according to an embodiment of this application. The method may be applied to the network architecture shown in FIG. 2. As shown in FIG. 4, the method includes the following steps.

401. A UDM sends a first registration request to an NRF, where the first registration request includes a profile parameter of the UDM. Correspondingly, the NRF receives the first registration request.

The profile parameter of the UDM includes a range of user identifiers of the UDM, the range of user identifiers of the UDM indicates a range of SUPIs managed or served by the UDM, and the SUPI is a subscription permanent identifier of a user.

Optionally, the NRF may further store the range of user identifiers of the UDM.

402. A UDR sends a second registration request to the NRF, where the second registration request includes a profile parameter of the UDR. Correspondingly, the NRF receives the second registration request.

The profile parameter of the UDR includes a range of user identifiers of the UDR, and the range of user identifiers of the UDR indicates a range of SUPIs managed or served by the UDR.

403. The UDM sends a token request (token request) to the NRF, where the token request is used to request to deliver a token (token). Correspondingly, the NRF receives the token request.

Optionally, the token request may include one or more parameters in the profile parameter of the UDM. For a parameter type included in the profile parameter of the UDM, refer to the foregoing descriptions. Details are not described herein again.

Optionally, the token request may include the range of user identifiers (range(s) of SUPIs) of the UDM.

It may be understood that when the token request includes one or more parameters in the profile parameter of the UDM, the token request may not include the range of user identifiers of the UDM. In this case, the NRF may query the profile parameter of the UDM based on information (for example, a network function instance ID of the UDM) in the token request, to obtain the range of user identifiers of the UDM. In addition, when the token request includes the range of user identifiers of the UDM, whether the token request includes one or more parameters in the profile parameter of the UDM is not limited.

It may be understood that, during specific implementation, 401 and 402 are not necessarily performed each time. To be specific, after the UDM sends the first registration request to the NRF and the UDR sends the second registration request to the NRF, within a specific validity period, the authorization method provided in this embodiment of this application may alternatively include only 403 to 406.

404. The NRF determines, based on to the token request, whether the UDM has permission to access the UDR; and if the UDM has the permission to access the UDR, the NRF sends a token response (token response) to the UDM. Correspondingly, the UDM receives the token response.

Optionally, when the token request includes one or more parameters in the profile parameter of the UDM, the token request may not include the range of user identifiers of the UDM. In this case, the token request may further include indication information. The indication information is used to indicate that the NRF needs to determine whether the UDM has the permission to access the UDR, or indicate that the NRF needs to determine whether the UDM is located in an area in which the UDM is allowed to access the UDR, or indicate the NRF to perform area-related authorization currently. In other words, before the NRF determines whether the UDM has the permission to access the UDR, the NRF further determines whether it is necessary to determine whether the UDM has the permission to access the UDR.

Optionally, when the token request includes the range of user identifiers of the UDM, the NRF may determine, based on the range of user identifiers of the UDM included in the token request, whether the UDM has the permission to access the UDR.

It may be understood that the token request may include identifier information of the UDR, and the identifier information of the UDR may be used to indicate the UDR that the UDM needs to access. To be specific, the NRF may learn of, by using the identifier information of the UDR, a specific UDR the UDM needs to access. For example, as shown in FIG. 2, if a UDM 1 needs to access a UDR 1 in a same area, the token request may include identifier information of the UDR 1. For another example, if the UDM 1 needs to access the UDR 2 that does not belong to a same area, the token request may include identifier information of the UDR 2.

The NRF may obtain the range of user identifiers of the UDR based on the identifier information of the UDR included in the request, and determine whether the range of user identifiers of the UDM belongs to the range of user identifiers of the UDR. If the range of user identifiers of the UDM belongs to the range of user identifiers of the UDR, the NRF generates the token, where the token includes the range of user identifiers of the UDM; the token includes the range of user identifiers of the UDR; or the token includes the range of user identifiers of the UDM and the range of user identifiers of the UDR. If the range of user identifiers of the UDM does not belong to the range of user identifiers of the UDR, the NRF does not generate the token, and therefore does not return the token response to the UDM. Alternatively, the NRF may return the token response to the UDM. The token response may include a failure cause value, exception information, and/or the like. The failure cause value is used to indicate a reason why the UDM cannot access the UDR. Alternatively, the NRF may return a reject message to the UDM.

For a specific location/specific locations of the range of user identifiers of the UDM and/or the range of user identifiers of the UDR included in the token, refer to related descriptions in Table 1.

It may be understood that the NRF may further perform integrity protection on the token, that is, the NRF may generate the token based on the identifier information of the UDR included in the token request. To be specific, the NRF may perform integrity protection on the token by using a shared key between the NRF and the UDR indicated by the identifier information of the UDR included in the token request, or by using a private key; and so on.

405. The UDM sends a service request to the UDR, where the service request includes the token, the token is used to check whether the UDM has the permission to access the UDR, and the token includes the range of user identifiers of the UDM and/or the range of user identifiers of the UDR. Correspondingly, the UDR receives the service request.

406. The UDR determines, based on the token in the service request, whether the UDM has the permission to access the UDR; and if the UDM has the permission to access the UDR, the UDR sends a service response to the UDM. Correspondingly, the UDM receives the service response.

The UDR may check whether the range of user identifiers of the UDM in the token belongs to the range of user identifiers of the UDR. If the range of user identifiers of the UDM belongs to the range of user identifiers of the UDR, the UDM has the permission to access the UDR. Alternatively, the UDR may check whether the range of user identifiers of the UDR included in the token is the same as a range of user identifiers of the UDR. If the range of user identifiers of the UDR is the same as the range of user identifiers of the UDR, the UDR determines that the UDM has the permission to access the UDR. If the UDR determines that the UDM has the permission to access the UDR, the UDR returns the service response to the UDM.

Optionally, the UDR may further perform integrity check on the token.

It may be understood that the UDR may first perform integrity check on the token, and then check whether the UDM has the permission to access the UDR. Alternatively, the UDR may first check whether the UDM has the permission to access the UDR, and then perform integrity check on the token; and so on. This is not limited in this embodiment of this application.

It may be understood that, during specific implementation, 403 and 404 are not necessarily performed each time. To be specific, after the UDM requests the token from the NRF, within a validity period of the token, the authorization method provided in this embodiment of this application may alternatively include only 405 and 406.

It may be understood that the method shown in FIG. 4 is also applicable to the network architecture shown in FIG. 1. For example, the UDM may be replaced with a CSCF or an AS, and the UDR may be replaced with an HSS. For example, the range of user identifiers may be replaced with (a range(s) of IMPIs (IP multimedia private identities, IMPIs)/(IMS public user identities, IMPUs)). For a specific implementation, refer to the methods shown in FIG. 3 and FIG. 4. Details are not described herein again.

In this embodiment of this application, an unauthorized first network device can be prevented from accessing a second network device, and security of information exchange between the first network device and the second network device can be improved. Further, the first network device in a same area is authorized to access the second network device in the same area, so that a delay of accessing the second network device by the first network device can be reduced, and efficiency can be improved.

It may be understood that the methods shown in FIG. 3 and FIG. 4 have respective focuses. For an implementation that is not described in detail in one embodiment, refer to the other embodiment.

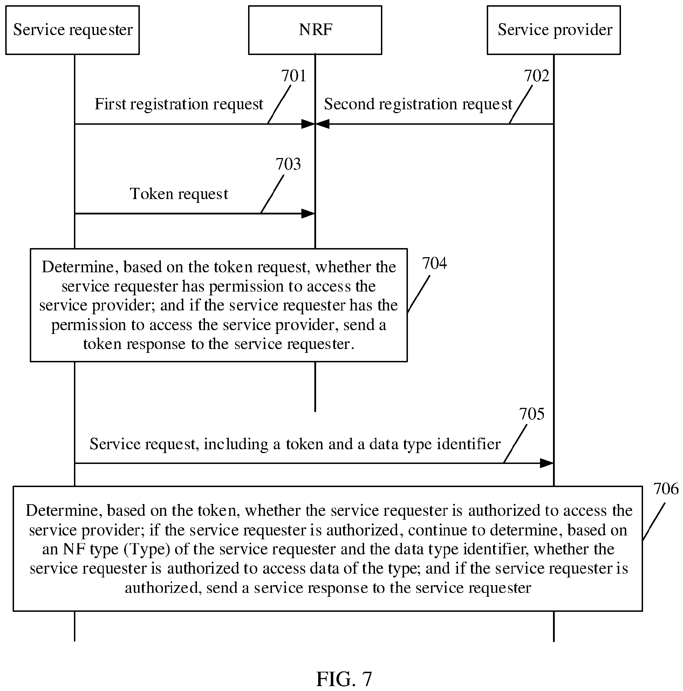

FIG. 7 is a schematic flowchart of another authorization method according to an embodiment of this application. The method may be applied to the network architecture shown in FIG. 2. As shown in FIG. 7, the method includes the following steps.

701. A service requester (for example, a UDM, a PCF, or an NEF) sends a first registration request to an NRF. Correspondingly, the NRF receives the first registration request.

In this embodiment of this application, the first registration request may include a profile (NF profile) parameter of the service requester. The profile parameter of the service requester may include parameters such as a network function instance ID (NF instance ID) of the service requester, a network function type (NF type) of the service requester, a group identifier (group ID) of the service requester, and a range of subscription permanent identifiers (range(s) of (subscriber permanent identifier, SUPI)s) of the service requester. It may be understood that a specific parameter of the profile parameter of the service requester is not limited in this embodiment of this application.

In this embodiment of this application, the first registration request is used to register a related information parameter (for example, a network function profile, NF profile) of the service requester with the NRF, so that the NRF performs service discovery and authorization.

702. A service provider (for example, a UDR) sends a second registration request to the NRF. Correspondingly, the NRF receives the second registration request.

In this embodiment of this application, the second registration request may include a profile (profile) parameter of the service provider, and the second NF profile parameter may include parameters such as a network function instance ID (NF instance ID) of the service provider, a network function type (NF type) of the service provider, a group identifier (group ID) of the service provider, and a range of subscription permanent identifiers (range(s) of (subscriber permanent identifier, SUPI)s) of the service provider. It may be understood that a specific parameter of the profile parameter of the service provider is not limited in this embodiment of this application.

Optionally, the second registration request may include a correspondence between an NF type of a service requester that can access the service provider and a type of data that can be accessed by the service requester. Specifically, the correspondence between the NF type of the service requester and the type of the data that can be accessed by the service requester may be a matching list of an NF type of a service provider and a data type identifier, or may be a mapping list of an NF type of a service provider and a data type identifier. The data type identifier is used to identify a type of data stored in the service provider. Specifically, the data type identifier may include a data set identifier (Data Set Identifier), a data subset identifier (Data Subset Identifier), a data key (Data Key), a data sub key (Data Sub Key), and/or the like. The data set identifier is used to identify a data set that the service requester needs to request, and the data set may be represented as a data type. For example, the data set may be subscription data (Subscription Data), application data (Application Data), policy data (Policy Data), or exposure data (Exposure Data). The data subset identifier is used to identify a data subset that needs to be requested by the service requester. The data subset is a lower level of the data set, and may be represented as a more specific data type. For example, the data subset may be access and mobility subscription data (Access and Mobility Subscription Data), data packet flow descriptions (Packet Flow Descriptions), UE context policy control data (UE context policy control data), or access and mobility information (Access and Mobility Information).

In this embodiment of this application, the second registration request is used to register a related information parameter (for example, a network function profile, NF profile) of the service provider with the NRF, so that the NRF performs service discovery and authorization.

703. The service requester sends a token request (token request) to the NRF, where the token request is used to request to deliver a token (token). Correspondingly, the NRF receives the token request.

In this embodiment of this application, the token request may include one or more parameters in the profile parameter of the service requester. For a parameter type included in the profile parameter of the service requester, refer to the foregoing descriptions. Details are not described herein again.

Optionally, the token request may further include a data type identifier (for example, a data set identifier, a data subset identifier, a data key, and/or a data sub key) of data stored in the service provider to be accessed by the service requester.

It may be understood that, during specific implementation, 701 and 702 are not necessarily performed each time. To be specific, after the service requester sends the first registration request to the NRF and the service provider sends the second registration request to the NRF, within a specific validity period, the authorization method provided in this embodiment of this application may alternatively include only 703 to 706.

704. The NRF determines, based on the token request, whether the service requester is authorized to access a service of the service provider. For example, the NRF determines, based on the token request, whether the service requester has permission to access the service provided by the service provider. If the NRF determines that the service requester is authorized to access the service of the service provider, the NRF sends a token response (token response) to the service requester, where the token response includes the token. Correspondingly, the service requester receives the token response.

Specifically, the NRF may determine, with reference to a local configuration or local policy information and based on one or more parameters in the profile parameter of the service requester included in the token request, whether the service requester is authorized to access the service provided by the service provider.

Optionally, if the NRF determines that the service requester is authorized to access the service provided by the service provider, the NRF may further determine, based on the network function type of the service requester (NF type of the NF producer) in the token request, a data type identifier (for example, a data set identifier, a data subset identifier, a data key, and/or a data sub key) in a service request, the correspondence between the NF type of the service requester and the type of the data that can be accessed by the service requester, and/or the local configuration or the local policy information, whether the service requester is authorized to access data of the data type. For example, the NRF determines whether the service requester has permission to access the data of the data type. If it is determined that the service requester is authorized to access the data of the data type, the service provider sends a service response to the service requester, where the service response includes the data of the foregoing type.

It may be understood that the token request may include identifier information of the service provider, and the identifier information of the service provider may be used to indicate the service provider that the service requester needs to access. To be specific, the NRF may learn of, by using the identifier information of the service provider, a specific service provider the service requester needs to access.

It may be understood that the NRF may further perform integrity protection on the token, that is, the NRF may generate the token based on the identifier information of the service provider included in the token request. To be specific, the NRF may perform integrity protection on the token by using a shared key between the NRF and the service provider indicated by the identifier information of the service provider included in the token request, or by using a private key; and so on.

705. The service requester sends a service request to the service provider.

Optionally, the service request includes the token. The service provider checks whether the service requester has permission to access the service provider.

Optionally, the service request may further include a data type identifier (for example, a data set identifier, a data subset identifier, a data key, and/or a data sub key). Correspondingly, the service provider receives the service request.

706. The service provider determines, based on the token in the service request, whether the service requester is authorized to access the service provider. If the service provider determines that the service requester is authorized to access the service provider, the service provider continues to determine, based on the network function type (NF type) of the service requester in the token and the data type identifier in the service request, whether the service requester is authorized to access data of the type. If the service provider determines that the service requester is authorized to access the data of the type, the service provider sends the service response to the service requester, where the service response includes the data of the foregoing type. Correspondingly, the service requester receives the service response.

In this embodiment of this application, the service provider may determine, based on the network function type of the service requester included in the token and the data type identifier in the service request, whether the service requester is authorized to access data of the type. For example, the service provider is the UDR, and the service provider may determine, based on the network function type of the service requester in the token, that the service requester is the UDM. Optionally, the service provider may determine, based on the data set identifier in the service request, that the type of the data to be accessed by the service requester is subscription data, and/or further determine, based on the data subset identifier in the service request, that a subtype of the data to be accessed by the service requester is access and mobile subscription data. Then, the service provider determines, based on a local configuration or a local policy, that the service requester (that is, the UDM) of the type can request data of the type (that is, the subscription data and/or the access and mobile subscription data), that is, the UDM may request subscription data and/or access and mobile subscription data in the UDR. For another example, if the service provider is the UDR, the network function type of the service requester is a PCF/NEF, and the data set identifier indicates that the data type is subscription data, the service provider determines, based on a local configuration or a local policy, that the service requester (that is, the PCF/NEF) of the type cannot request data of the type (that is, the subscription data), that is, the PCF/NEF cannot request subscription data in the UDR. For another example, the service provider is the UDR, and the data set identifier indicates that the data type is policy data. If the network function type of the service requester is the PCF, the service provider determines that the service requester (that is, the PCF) of the type can request data (that is, subscription data) of the type. If the network function type of the service requester is the UDM/NEF, the service provider determines that the service requester (that is, the UDM/NEF) of the type cannot request data (that is, subscription data) of the type, that is, only the PCF can request policy data in the UDR, and the UDM/NEF cannot request the policy data in the UDR. If the service provider determines that the service requester has permission to request to access data of the type, the service provider returns the service response to the service requester, where the service response includes the data of the foregoing type.

It may be understood that the service provider may determine, with reference to a local configuration or a local policy and based on the NF type of the service provider and the data type identifier in the service request, whether the service requester of the type is authorized to request/access data of the type. Optionally, the service provider may alternatively determine, based on the NF type of the service provider and the data type identifier in the service request and with reference to the correspondence between the NF type of the service requester and the type of the data that can be accessed by the service requester, whether the service requester of the type is authorized to request/access data of the type.

Optionally, the service provider may alternatively check whether the data type identifier included in the token is consistent with the data type identifier in the service request, and if the data type identifier included in the token is consistent with the data type identifier in the service request, the service provider determines that the service provider is authorized to access data of the type.

Optionally, the service provider may alternatively check whether the data type identifier included in the token is consistent with a locally stored data type identifier, and if the data type identifier included in the token is consistent with the locally stored data type identifier, the service provider determines that the service provider is authorized to access data of the type.

Optionally, the service provider may alternatively determine, based on the NF type and the data type identifier of the service provider in the token and with reference to the correspondence between the NF type of the service requester and the type of the data that can be accessed by the service requester and/or with reference to a local configuration or a local policy, whether the service requester of the type is authorized to request/access data of the type.

It may be understood that, after receiving the service request including the token, the service provider may further perform integrity check on the token, and if the check succeeds, return the service response to the service requester. For example, the service provider may perform integrity check on the token by using a shared key between the service provider and the NRF or by using a public key of the NRF. After the check succeeds, the service provider responds to the service requester for a related service requested by the service request. It may be understood that the service provider may first perform integrity check on the token, and then check whether the service requester is authorized to access the service provider. Alternatively, the service provider may first check whether the service requester has the permission to access the service provider, and then perform integrity check on the token. This is not limited in this embodiment of this application.

It may be understood that, during specific implementation, 703 and 704 are not necessarily performed each time. To be specific, after the service requester requests the token from the NRF, within a validity period of the token, the authorization method provided in this embodiment of this application may alternatively include only 705 and 706.

In this embodiment of this application, for example, the service request may be used to request to query user subscription data, so that the service provider returns the user subscription data. For another example, the service request may be used to request to update policy data, so that the service provider returns an update status (an update success or failure) to the service requester after updating the policy data. Content requested by the service request is not limited in this embodiment of this application.

In this embodiment of this application, after it is determined that the service requester has the permission to access the service provider, whether the service requester is authorized to access data of the type may be further determined based on the network function type (NF type) of the service requester and the data type identifier, so that authorization can be completed at a data type granularity, thereby preventing an NF of an unauthorized type from accessing sensitive data stored in the service provider, and further improving security.

The following describes in detail apparatuses in embodiments of this application.

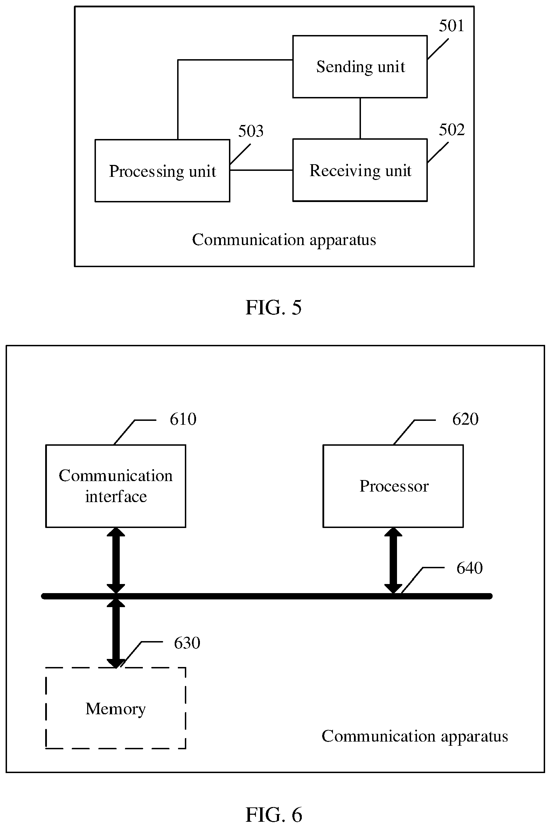

FIG. 5 is a schematic diagram of a structure of a communication apparatus according to an embodiment of this application. The communication apparatus may be configured to perform functions implemented by the first network device in FIG. 3, FIG. 4, and FIG. 7. As shown in FIG. 5, the communication apparatus includes:
a sending unit 501, configured to send a service request to a second network device, where the service request includes a token, the token is used to check whether the communication apparatus has permission to access the second network device, the token includes first information and/or second information, the first information is used to identify the communication apparatus, and the second information is used to identify a network device allowed to access the second network device; and
a receiving unit 502, configured to: when the second network device succeeds in checking the token, receive a service response sent by the second network device, where the service response is used to respond to the service request.

In a possible implementation, the first information includes a domain of the communication apparatus, and the second information includes an allowed domain of the second network device;
the first information includes a routing indicator of the communication apparatus, and the second information includes a routing indicator list; or
the first information includes a group identifier of the communication apparatus, and the second information includes a group identifier list.

In a possible implementation, the sending unit 501 is further configured to send a token request to a third network device, where the token request is used to request to deliver the token; and
the receiving unit 502 is further configured to receive a token response that includes the token and that is sent by the third network device.

In a possible implementation, the token request includes the first information.

In a possible implementation, the sending unit 501 is further configured to send a first registration request to the third network device, where the first registration request includes the first information.

It should be understood that when the communication apparatus is the first network device or a component that implements the foregoing functions in the first network device, the communication apparatus may further include a processing unit 503. The processing unit 503 may be one or more processors, the sending unit 501 may be a transmitter, and the receiving unit 502 may be a receiver. Alternatively, the sending unit 501 and the receiving unit 502 are integrated into one component, for example, a transceiver.

When the communication apparatus is a chip, the processing unit 503 may be one or more processors, the sending unit 501 may be an output interface, and the receiving unit 502 may be an input interface. Alternatively, the sending unit 501 and the receiving unit 502 are integrated into one unit, for example, an input/output interface, which is also referred to as a communication interface, an interface circuit, an interface, or the like.

It may be understood that, for implementation of the units shown in FIG. 5, refer to corresponding descriptions in the foregoing embodiments.

FIG. 5 is a schematic diagram of a structure of a communication apparatus according to an embodiment of this application. The communication apparatus may be configured to perform functions implemented by the second network device in FIG. 3, FIG. 4, and FIG. 7. As shown in FIG. 5, the communication apparatus includes:
a receiving unit 502, configured to receive a service request from a first network device, where the service request includes a token, the token is used to check whether the first network device has permission to access the communication apparatus, the token includes first information and/or second information, the first information is used to identify the first network device, and the second information is used to identify a network device allowed to access the second network device;
a processing unit 503, configured to determine, based on the token, whether the first network device has the permission to access the communication apparatus; and
a sending unit 501, configured to: if the first network device has the permission to access the communication apparatus, send a service response to the first network device, where the service response is used to respond to the service request.

In a possible implementation, the sending unit 501 is further configured to send a second registration request to a third network device, where the second registration request includes the second information.

In a possible implementation, the first information includes a domain of the first network device, and the second information includes an allowed domain of the communication apparatus;
the first information includes a routing indicator of the first network device, and the second information includes a routing indicator list; or
the first information includes a group identifier of the first network device, and the second information includes a group identifier list.

It should be understood that when the communication apparatus is the second network device or a component that implements the foregoing functions in the second network device, the communication apparatus may further include the processing unit 503. The processing unit 503 may be one or more processors, the sending unit 501 may be a transmitter, and the receiving unit 502 may be a receiver. Alternatively, the sending unit 501 and the receiving unit 502 are integrated into one component, for example, a transceiver.

When the communication apparatus is a chip, the processing unit 503 may be one or more processors, the sending unit 501 may be an output interface, and the receiving unit 502 may be an input interface. Alternatively, the sending unit 501 and the receiving unit 502 are integrated into one unit, for example, an input/output interface, which is also referred to as a communication interface, an interface circuit, an interface, or the like.

FIG. 5 is a schematic diagram of a structure of a communication apparatus according to an embodiment of this application. The communication apparatus may be configured to perform functions implemented by the third network device (such as the NRF) in FIG. 3, FIG. 4, and FIG. 7. As shown in FIG. 5, the communication apparatus includes:
a receiving unit 502, configured to receive a token request sent by a first network device, where the token request is used to request to deliver a token;
a processing unit 503, configured to determine, based on the token request, whether the first network device has permission to access a second network device; and
a sending unit 501, configured to: if the first network device has the permission to access the second network device, send a token response including the token to the first network device, where the token includes first information and/or second information, the first information is used to identify the first network device, and the second information is used to identify a network device allowed to access the second network device.

In a possible implementation, the receiving unit 502 is further configured to receive a first registration request from the first network device, where the first registration request includes the first information; and
the receiving unit 502 is further configured to receive a second registration request from the second network device, where the second registration request includes the second information.

In a possible implementation, the first information includes a domain of the first network device, and the second information includes an allowed domain of the second network device;
the first information includes a routing indicator of the first network device, and the second information includes a routing indicator list; or
the first information includes a group identifier of the first network device, and the second information includes a group identifier list.

It should be understood that when the communication apparatus is the third network device or a component that implements the foregoing functions in the third network device, the communication apparatus may further include the processing unit 503. The processing unit 503 may be one or more processors, the sending unit 501 may be a transmitter, and the receiving unit 502 may be a receiver. Alternatively, the sending unit 501 and the receiving unit 502 are integrated into one component, for example, a transceiver.

When the communication apparatus is a chip, the processing unit 503 may be one or more processors, the sending unit 501 may be an output interface, and the receiving unit 502 may be an input interface. Alternatively, the sending unit 501 and the receiving unit 502 are integrated into one unit, for example, an input/output interface, which is also referred to as a communication interface, an interface circuit, an interface, or the like.

FIG. 6 is a schematic diagram of a structure of a communication apparatus according to an embodiment of this application. The communication apparatus is configured to implement any function of the first network device, the second network device, and the third network device in the foregoing methods. When the function of the first network device is implemented, the apparatus may be the first network device, an apparatus in the first network device, or an apparatus that can be used together with the first network device. When the function of the second network device is implemented, the apparatus may be the second network device, an apparatus in the second network device, or an apparatus that can be used together with the second network device. When the function of the third network device is implemented, the apparatus may be the third network device, an apparatus in the third network device, or an apparatus that can be used together with the third network device. For example, the communication apparatus may alternatively be a chip system. In this embodiment of this application, the chip system may include a chip, or may include the chip and another discrete component. The communication apparatus includes at least one processor 620, configured to implement any function of the first network device, the second network device, or the third network device in the methods provided in embodiments of this application. The communication apparatus may further include a communication interface 610. In this embodiment of this application, the communication interface may be a transceiver, a circuit, a bus, a module, or a communication interface of another type, and is configured to communicate with another device by using a transmission medium. For example, the communication interface 610 is used by an apparatus in the communication apparatus to communicate with another device. The processor 620 receives and sends data through the communication interface 610, and is configured to implement the methods in the foregoing method embodiments.

The communication apparatus may further include at least one memory 630, configured to store program instructions and/or data. The memory 630 is coupled to the processor 620. The coupling in this embodiment of this application is an indirect coupling or a communication connection between apparatuses, units, or modules in an electrical form, a mechanical form, or another form, and is used for information exchange between the apparatuses, the units, or the modules. The processor 620 may cooperate with the memory 630. The processor 620 may execute the program instructions stored in the memory 630. At least one of the at least one memory may be included in the processor.

A specific connection medium among the communication interface 610, the processor 620, and the memory 630 is not limited in this embodiment of this application. In this embodiment of this application, the memory 630, the processor 620, and the communication interface 610 are connected by using a bus 640 in FIG. 6. The bus is represented by using a bold line in FIG. 6. A manner of a connection between other components is merely an example for description, and imposes no limitation. The bus may be classified into an address bus, a data bus, a control bus, and the like. For convenience of representation, only a bold line is used for representation in FIG. 6, but it does not represent that there is only one bus or one type of bus.

When the communication apparatus is specifically a chip or a chip system, the communication interface 610 may output or receive a baseband signal. When the communication apparatus is specifically a device, the communication interface 610 may output or receive a radio frequency signal. In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, or any conventional processor, or the like. The steps of the methods disclosed with reference to embodiments of this application may be directly performed and completed by a hardware processor, or may be performed and completed by a combination of hardware and software modules in the processor.

According to the methods provided in embodiments of this application, this application further provides a computer program product. The computer program product includes computer program code. When the computer program code is run on a computer, the computer is enabled to perform the method in the embodiment shown in FIG. 3, FIG. 4, or FIG. 7.

According to the methods provided in embodiments of this application, this application further provides a computer-readable medium. The computer-readable medium stores program code. When the program code is run on a computer, the computer is enabled to perform the method in the embodiment shown in FIG. 3, FIG. 4, or FIG. 7.

According to the methods provided in embodiments of this application, this application further provides a system, including the foregoing first network device, second network device, and third network device.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disc, SSD)), or the like.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, a thread of execution, a program, and/or a computer. As shown in the figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, illustrative logical blocks (illustrative logical blocks) and steps (steps) described with reference to the embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An authorization method, wherein the method comprises:
sending, by a first network device, a service request to a second network device, wherein the service request comprises a token, the token is used to check whether the first network device has permission to access the second network device, the token comprises first information and/or second information, the first information is used to identify the first network device, and the second information is used to identify a network device allowed to access the second network device; and
receiving, by the first network device, a service response sent by the second network device.

2. The method according to claim 1, wherein the first information comprises a domain of the first network device, and the second information comprises an allowed domain of the second network device;
the first information comprises a routing indicator of the first network device, and the second information comprises a routing indicator list; or
the first information comprises a group identifier of the first network device, and the second information comprises a group identifier list.

3. The method according to claim 1 or 2, wherein before the sending, by a first network device, a service request to a second network device, the method further comprises:
sending, by the first network device, a token request to a third network device, wherein the token request is used to request to deliver the token; and
receiving, by the first network device, a token response that comprises the token and that is sent by the third network device.

4. The method according to claim 3, wherein the token request comprises the first information.

5. The method according to claim 3 or 4, wherein before the sending, by the first network device, a token request to a third network device, the method further comprises:
sending, by the first network device, a first registration request to the third network device, wherein the first registration request comprises the first information.

6. An authorization method, wherein the method comprises:
receiving, by a second network device, a service request from a first network device, wherein the service request comprises a token, the token is used to check whether the first network device has permission to access the second network device, the token comprises first information and/or second information, the first information is used to identify the first network device, and the second information is used to identify a network device allowed to access the second network device;
determining, by the second network device based on the token, whether the first network device has the permission to access the second network device; and
if the first network device has the permission to access the second network device, sending, by the second network device, a service response to the first network device.

7. The method according to claim 6, wherein before the receiving, by a second network device, a service request from a first network device, the method further comprises:
sending, by the second network device, a second registration request to a third network device, wherein the second registration request comprises the second information.

8. The method according to claim 6 or 7, wherein the first information comprises a domain of the first network device, and the second information comprises an allowed domain of the second network device;
the first information comprises a routing indicator of the first network device, and the second information comprises a routing indicator list; or
the first information comprises a group identifier of the first network device, and the second information comprises a group identifier list.

9. An authorization method, wherein the method comprises:
receiving, by a third network device, a token request sent by a first network device, wherein the token request is used to request to deliver a token;
determining, by the third network device based on the token request, whether the first network device has permission to access a second network device; and
if the first network device has the permission to access the second network device, sending, by the third network device, a token response comprising the token to the first network device, wherein the token comprises first information and/or second information, the first information is used to identify the first network device, and the second information is used to identify a network device allowed to access the second network device.

10. The method according to claim 9, wherein before the receiving, by a third network device, a token request sent by a first network device, the method further comprises:
receiving, by the third network device, a first registration request from the first network device, wherein the first registration request comprises the first information; and
receiving, by the third network device, a second registration request from the second network device, wherein the second registration request comprises the second information.

11. The method according to claim 9 or 10, wherein the first information comprises a domain of the first network device, and the second information comprises an allowed domain of the second network device;
the first information comprises a routing indicator of the first network device, and the second information comprises a routing indicator list; or
the first information comprises a group identifier of the first network device, and the second information comprises a group identifier list.

12. A communication apparatus, wherein the apparatus comprises:
a sending unit, configured to send a service request to a second network device, wherein the service request comprises a token, the token is used to check whether the communication apparatus has permission to access the second network device, the token comprises first information and/or second information, the first information is used to identify the communication apparatus, and the second information is used to identify a network device allowed to access the second network device; and
a receiving unit, configured to receive a service response sent by the second network device.

13. The apparatus according to claim 12, wherein the first information comprises a domain of the communication apparatus, and the second information comprises an allowed domain of the second network device;
the first information comprises a routing indicator of the communication apparatus, and the second information comprises a routing indicator list; or
the first information comprises a group identifier of the communication apparatus, and the second information comprises a group identifier list.

14. The apparatus according to claim 12 or 13, wherein
the sending unit is further configured to send a token request to a third network device, wherein the token request is used to request to deliver the token; and
the receiving unit is further configured to receive a token response that comprises the token and that is sent by the third network device.

15. The apparatus according to claim 14, wherein the token request comprises the first information.

16. The apparatus according to claim 14 or 15, wherein
the sending unit is further configured to send a first registration request to the third network device, wherein the first registration request comprises the first information.

17. A communication apparatus, wherein the apparatus comprises:
a receiving unit, configured to receive a service request from a first network device, wherein the service request comprises a token, the token is used to check whether the first network device has permission to access the communication apparatus, the token comprises first information and/or second information, the first information is used to identify the first network device, and the second information is used to identify a network device allowed to access the communication apparatus;
a processing unit, configured to determine, based on the token, whether the first network device has the permission to access the communication apparatus; and
a sending unit, configured to: if the first network device has the permission to access the communication apparatus, send a service response to the first network device.

18. The apparatus according to claim 17, wherein
the sending unit is further configured to send a second registration request to a third network device, wherein the second registration request comprises the second information.

19. The apparatus according to claim 17 or 18, wherein the first information comprises a domain of the first network device, and the second information comprises an allowed domain of the communication apparatus;
the first information comprises a routing indicator of the first network device, and the second information comprises a routing indicator list; or
the first information comprises a group identifier of the first network device, and the second information comprises a group identifier list.

20. A communication apparatus, wherein the apparatus comprises:
a receiving unit, configured to receive a token request sent by a first network device, wherein the token request is used to request to deliver a token;
a processing unit, configured to determine based on the token request, whether the first network device has permission to access a second network device; and
a sending unit, configured to: if the first network device has the permission to access the second network device, send a token response comprising the token to the first network device, wherein the token comprises first information and/or second information, the first information is used to identify the first network device, and the second information is used to identify a network device allowed to access the second network device.

21. The apparatus according to claim 20, wherein
the receiving unit is further configured to receive a first registration request from the first network device, wherein the first registration request comprises the first information; and
the receiving unit is further configured to receive a second registration request from the second network device, wherein the second registration request comprises the second information.

22. The apparatus according to claim 20 or 21, wherein the first information comprises a domain of the first network device, and the second information comprises an allowed domain of the second network device;
the first information comprises a routing indicator of the first network device, and the second information comprises a routing indicator list; or
the first information comprises a group identifier of the first network device, and the second information comprises a group identifier list.

23. A communication apparatus, comprising a processor, a memory, and a transceiver, wherein
the transceiver is configured to receive a signal or send a signal;
the memory is configured to store program code; and
the processor is configured to execute the program code, to enable the communication apparatus to perform the method according to any one of claims 1 to 11.

24. A communication apparatus, comprising a processor and an interface circuit, wherein
the interface circuit is configured to receive code instructions and transmit the code instructions to the processor; and the processor runs the code instructions, to perform the method according to any one of claims 1 to 11.

25. A computer-readable storage medium, wherein the computer-readable storage medium is configured to store instructions; and when the instructions are executed, the method according to any one of claims 1 to 11 is implemented.

26. A computer program product, wherein the computer program product comprises instructions; and when the instructions are executed, the method according to any one of claims 1 to 11 is implemented.

27. A communication system, wherein the communication system comprises a first network device, a second network device, and a third network device, wherein
the first network device is configured to send a first registration request to the third network device, wherein the first registration request comprises first information;
the second network device is configured to send a second registration request to the third network device, wherein the second registration request comprises second information;
the third network device is configured to receive the first registration request and the second registration request;
the first network device is further configured to send a token request to the third network device;
the third network device is further configured to: receive the token request, and send a token response comprising the token to the first network device;
the first network device is further configured to receive the token response comprising the token;
the first network device is further configured to send a service request to the second network device, wherein the service request comprises the token, the token is used to check whether the first network device has permission to access the second network device, the token comprises first information and/or second information, the first information is used to identify the first network device, and the second information is used to identify a network device allowed to access the second network device;
the second network device is further configured to: receive the service request, determine whether the first network device has the permission to access the second network device, and when the first network device has the permission to access the second network device, send, by the second network device, a service response to the first network device; and
the first network device is further configured to receive the service response.
